Europäisches Patentamt

European Patent Office

Office européen des brevets

(19)

(11) Numéro de publication : **0 532 420 B1**

(12) **FASCICULE DE BREVET EUROPEEN**

(45) Date de publication du fascicule du brevet :
23.08.95 Bulletin 95/34

(51) Int. Cl.$^6$ : **G01M 15/00, F02D 41/14**

(21) Numéro de dépôt : **92402483.9**

(22) Date de dépôt : **11.09.92**

(54) **Procédé et dispositif de mesure du couple d'un moteur thermique à combustion interne tenant compte, notamment, de la recirculation des gaz d'échappement et des gaz brûlés résiduels et de l'excès de comburant.**

(30) Priorité : **12.09.91 FR 9111274**

(43) Date de publication de la demande :
**17.03.93 Bulletin 93/11**

(45) Mention de la délivrance du brevet :
**23.08.95 Bulletin 95/34**

(84) Etats contractants désignés :
**DE ES GB IT**

(56) Documents cités :
**EP-A- 0 164 873**

(56) Documents cités :
**EP-A- 0 437 057**
**EP-A- 0 490 392**
**WO-A-90/07051**
**FR-A- 2 301 693**
**US-A- 4 987 770**

(73) Titulaire : **REGIE NATIONALE DES USINES RENAULT S.A.**
**34, Quai du Point du Jour**
**F-92109 Boulogne Billancourt (FR)**

(72) Inventeur : **Jehanno, Gilles**
**32, Boulevard de Mantes,**
**Elisabethville**
**F-78410 Aubergenville (FR)**

EP 0 532 420 B1

## Description

L'invention se rapporte à un procédé et un dispositif de mesure de la valeur du couple gaz moyen par combustion d'un moteur thermique à combustion interne et, plus précisément, à des procédés et dispositifs de correction de la valeur de ce couple gaz moyen par combustion en fonction de certains paramètres de fonctionnement tels que le taux de recirculation des gaz d'échappement, le taux des gaz brûlés résiduels et l'excès de comburant (air).

Sur un moteur thermique à combustion interne, le couple produit est la résultante de nombreux paramètres et reflète l'adéquation des réglages. Il constitue la grandeur de sortie d'un système dynamique complexe. Sa mesure est relativement simple et courante sur un banc d'essais, mais le coût de cette mesure est relativement élevé. En outre, les bancs de mesure usuels ne délivrent que les valeurs moyennes sur plusieurs cycles du couple du moteur en fonctionnement stabilisé. De telles mesures de valeurs moyennes sur un grand nombre de combustions sont insuffisantes à bien des égards, par exemple pour optimiser certains réglages du moteur ou pour en diagnostiquer certains défauts de fonctionnement. Parmi ces défauts, on notera les ratés de combustion dont la détection et l'évaluation statistique sont prévues par les nouvelles réglementations internationales.

Pour atteindre ces derniers objectifs, l'analyse quantitative du couple gaz moyen par combustion produit par les combustions du mélange gazeux dans les différents cylindres des moteurs thermiques s'impose. Une telle analyse n'a jusqu'à présent été pratiquée qu'en laboratoire ou sur des moteurs de très grande puissance et elle a généralement fait appel à des relevés de pression dans les chambres de combustion.

Cette technique présente, l'inconvénient majeur de ne pouvoir être mise en oeuvre que sur des moteurs conçus (ou spécialement modifiés) pour permettre une implantation de capteurs de pression. En outre, elle n'est, à l'évidence, pas immédiatement applicable aux moteurs montés en série sur véhicule et, par ailleurs, elle le demeurera aussi longtemps que la fiabilité, le prix, la durée de vie et la commodité de mise en oeuvre des capteurs de pression ne seront pas conformes aux impératifs économiques de l'industrie automobile.

Dans une demande internationale de brevet PCT, déposée par Motorola Inc. et publiée le 20 juin 1990 sous le N° WO 90/07051, est décrit un système de gestion électronique du fonctionnement d'un moteur thermique à combustion interne. Ce système est fondé sur le postulat que la valeur instantanée de la période de défilement des dents d'une couronne de mesure, solidaire du volant d'inertie du moteur, devant un capteur fixe, correspond à la mesure de la puissance instantanée successivement produite dans chacun des cylindres du moteur. Le signal ainsi produit par le capteur est traité en conséquence. Ce traitement consiste : (1) à mesurer la période instantanée $d_i$ de défilement des dents de la couronne devant le capteur, (2) à respectivement multiplier les périodes $d_i$ des dents afférentes à chacun des cylindres par des facteurs de pondération $P_i$ déterminés appartenant à une suite correspondant à un critère de fonctionnement particulier du moteur tel que le cliquetis ou la puissance (la procédure de détermination de ces facteurs n'est pas décrite) (3) à faire la somme des résultats $d_i P_i$ obtenus pour chaque cylindre, (4) à comparer cette somme à une valeur particulière prise comme référence, (5) à déduire, le cas échéant, du résultat de cette comparaison la présence de cliquetis dans un cylindre ou le déséquilibre de puissance d'un cylindre par rapport aux autres et (6) à modifier en conséquence l'alimentation du cylindre en mélange air-carburant.

Le but du système ainsi décrit est de supprimer tout cliquetis dans les cylindres du moteur et/ou d'équilibrer les puissances instantanées fournies par chacun d'eux. De ce fait, la valeur absolue des différentes grandeurs intermédiaires obtenues n'est ni recherchée ni trouvée.

Dans la demande EP-A-532419 de la demanderesse et intitulée:"PROCEDE ET DISPOSITIF DE MESURE DU COUPLE D'UN MOTEUR THERMIQUE A COMBUSTION INTERNE", il a été décrit un dispositif pour produire une valeur Cg, représentative du couple gaz moyen engendré par chaque combustion du mélange gazeux dans le ou les cylindre(s) d'un moteur thermique à combustion interne. Ce dispositif comprend :

- des repères de mesure disposés sur une couronne solidaire du volant d'inertie du moteur ou solidaire du vilebrequin;
- des moyens pour définir une référence d'indexation par tour de volant ou par tour d'arbre à cames pour les repères ;
- un capteur de défilement des repères, monté fixe au voisinage de la couronne;
- des moyens pour produire une valeur primaire $d_i$ représentative de la durée de défilement de chacun des repères devant le capteur;
- des moyens pour traiter cette valeur primaire $d_i$ et ainsi produire deux valeurs secondaires respectivement représentatives de la vitesse angulaire moyenne $\Omega_m$ sur des repères au cours d'une période des combustions dans le moteur et, pour la même période de combustion, de la projection $E\cos\Phi$, sur la ligne de référence de phase, des groupes de repères respectivement afférents aux combustions dans les différents cylindres du moteur, de la composante alternative E de la vitesse angulaire instantanée

$\Omega_i$ des repères, à la fréquence des combustions dans le moteur;

- des moyens pour combiner ces deux valeurs secondaires, suivant une relation :

$$Cg = -a.\Omega_m.E\cos\Phi + b.\Omega_m^2$$

et ainsi produire la valeur recherchée, les termes a et b étant des constantes déterminées expérimentalement.

Dans le cas particulier d'un moteur à essence quatre cylindres à quatre temps qui fonctionne suivant le cycle de Beau de Rochas, chacun des quatre temps du cycle (admission, compression, combustion-détente, échappement) se produit au cours d'un demi-tour particulier du volant d'inertie solidaire de vilebrequin du moteur. L'énergie cinétique acquise par le système concerné (vilebrequin, volant et masses alternatives) est le résultat des différents couples instantanés positifs et négatifs, exercés sur lui pendant chacun des différents temps du cycle de fonctionnement du moteur.

Le couple Cg, calculé par demi-tour dans le cas particulier ci-dessus, est engendré pendant les phases de compression et de combustion-détente des mélanges gazeux respectivement emprisonnés dans deux cylindres à combustions contiguës. Le moteur étant équipé de quatre cylindres dans le cas envisagé, les deux autres cylindres sont en phases admission et échappement et on peut démontrer, en première approximation, qu'ils n'interviennent pas sur la valeur de Cg du fait de la projection cos$\Phi$. Les phases de compression étant moins sujettes à des variations, à des dispersions que les phases de combustion-détente, on peut dire pour des questions de clarté de présentation, que la valeur de Cg calculée sur un demi-tour est celle relative au cylindre qui était en combustion. On peut dire aussi que le couple Cg est une estimation du couple gaz moyen sur les deux phases, compression et combustion-détente, du même cylindre emprisonnant donc le même mélange gazeux.

Quel que soit le moteur, Cg est, d'une part, normalement positif et, d'autre part, équilibré par la somme des couples moyens résistants provenant des variations des inerties rotatives du moteur, des différents frottements internes au moteur, des dépressions d'admission et des surpressions d'échappement des autres cylindres et, bien entendu, du couple utile appliqué à la charge, c'est-à-dire au véhicule.

Le théorème de l'énergie cinétique enseigne que la variation élémentaire de l'énergie cinétique d'un système égale le travail élémentaire des couples auxquels il est soumis. En appliquant ce théorème au système principalement concerné, à savoir le vilebrequin, le volant d'inertie et les masses alternatives impliquées et en supposant que l'ensemble vilebrequin-volant est indéformable, en faisant une analyse harmonique du résultat obtenu, la charge disposée en aval du volant d'inertie étant considérée comme totalement découplée pour la fréquence considérée, on démontre que la composante alternative Ca du couple gaz à la fréquence des combustions dans le moteur, est liée à la vitesse angulaire moyenne $\Omega_m$ du volant d'inertie et à la projection, sur une ligne de référence de phase, de la composante alternative E de la vitesse angulaire instantanée $\Omega_i$ de ce volant, à la fréquence des combustions du moteur, par la relation linéaire suivante :

$$Ca = -a_1.\Omega_m.E\cos\Phi + b_1.\Omega_m^2$$

dans laquelle $a_1$ et $b_1$ sont deux termes constants, le premier proportionnel à l'inertie rotative du moteur et le second, fonction du moment d'inertie des masses alternatives et, dans certains cas de mesure, des irrégularités de position des repères de la couronne de mesure.

Par ailleurs, une étude expérimentale au banc d'essais de plusieurs moteurs thermiques à combustion interne a montré que le rapport Cg/Ca de la valeur moyenne Cg du couple gaz et de la composante alternative Ca du même couple gaz, varie peu pour les différents régimes et pour les différentes charges de fonctionnement du moteur concerné et ce d'autant mieux que la richesse (r) du mélange gazeux est constante ou, supérieure ou égale à l'unité.

En conséquence, l'expérimentation et le calcul pour un système vilebrequin-volant indéformable, ont permis d'établir la relation

$$Cg = -a.\Omega_m.E\cos\Phi + b.\Omega_m^2$$

qui est à l'origine du procédé et du dispositif de mesure pour les bas régimes du moteur tels que décrits et revendiqués dans la demande de brevet précitée.

Dans le cas des hauts régimes de fonctionnement du moteur, cette relation de base doit toutefois subir une correction. En effet, à haut régime, les liaisons élastiques de torsion qui existent tout particulièrement celles entre le vilebrequin et le volant d'inertie du moteur, présentent une fonction de transfert fréquentiel qui modifie le vecteur E représentatif de la composante alternative fondamentale de la vitesse angulaire instantanée du volant, à la fréquence fi des combustions dans le moteur. Comme cette liaison comporte un terme d'amortissement négligeable, sa fonction de transfert peut s'écrire $Z = 1 + (fi/fr)^2$, le terme fi étant la fréquence de combustion proportionnelle à la fréquence fv de rotation du volant (fi = fv.2k/t) avec k le nombre de cylindres et t le nombre de temps du cycle de fonctionnement du moteur et fr, la fréquence de résonance mécanique en torsion de la liaison vilebrequin/volant. En pratique, cette fréquence fr est égale à quatre à six fois la fréquence de rotation maximale en Hertz du moteur, de sorte que le terme $z = (fi/fr)^2$ relatif à la fréquence de combustion fi sera souvent faible et qu'un simple facteur de correction $(1-z)$ pourra être appliqué à la constante "a" de la relation de base visée ci-dessus, pour que la valeur Cg calculée soit corrigée de l'effet "torsion vilebrequin/volant".

Dans la demande EP-A-532 419 précitée, il n'a pas été tenu compte de l'influence, pour le calcul de Cg de la recirculation des gaz d'échappement (RGE), de la présence des gaz brûlés résiduels (GBR) et de l'excès de comburant (air) dans les cylindres.

Aussi, le but de la présente invention est de compléter le procédé et le dispositif de la demande de brevet français précitée pour calculer la valeur Cg du couple gaz moyen par combustion en tenant compte du taux de recirculation des gaz d'échappement (RGE) et du taux des gaz brûlés résiduels (GBR).

L'invention concerne donc, dans un système pour produire une valeur Cg représentative du couple gaz moyen par combustion, un dispositif pour corriger la valeur Cg en fonction du taux total (q) de recirculation des gaz d'échappement et des gaz brûlés résiduels dans les cylindres du moteur, caractérisé en ce qu'il comprend des moyens de calcul pour produire un facteur de correction $Q_2 = (1-p_2.q)$, dans lequel $p_2$ est une constante proche de 0,5 à déterminer expérimentalement et q, la valeur dudit taux total, puis appliquer ce facteur $Q_2$ à la valeur Cg, le cas échéant préalablement corrigée en fonction de la richesse r du mélange gazeux, pour fournir une valeur de mesure corrigée $(Cg)_r$ ou $(Cg)_{r,q}$.

L'invention concerne également un dispositif pour corriger la valeur Cg en cas d'excès de comburant dans les cylindres, caractérisé en ce qu'il comprend:

- des premiers moyens de calcul pour produire une valeur intermédiaire $Ca=Cg/u$, avec $u<1$, une constante mémorisée qui est déterminée expérimentalement, et
- des deuxièmes moyens de calcul pour produire la valeur recherchée $(Cg)_p = Ca-k_R.R$, avec $k_R$ une constante mémorisée qui est déterminée expérimentalement et R, le remplissage des cylindres, qui est déterminé expérimentalement en fonction de grandeurs déjà calculées ou mesurées, et formant une cartographie mémorisée.

L'invention concerne, de manière similaire, un procédé pour corriger la valeur Cg en fonction du taux de recirculation des gaz d'échappement et du taux des gaz brûlés résiduels ainsi qu'un procédé pour corriger la valeur Cg en cas d'excès de comburant dans les cylindres.

Les caractéristiques et avantages de l'invention ressortiront d'une manière plus précise de la description d'une forme de réalisation particulière de l'invention, faite ci-après à titre d'exemple non limitatif, en référence aux dessins annexés dans lesquels

- la figure 1 est un schéma des différents éléments constitutifs du dispositif de mesure du couple gaz moyen par combustion selon la demande de brevet français précitée, et
- les figures 2, 3 et 4 sont des schémas d'étages effectuant des corrections selon l'invention.

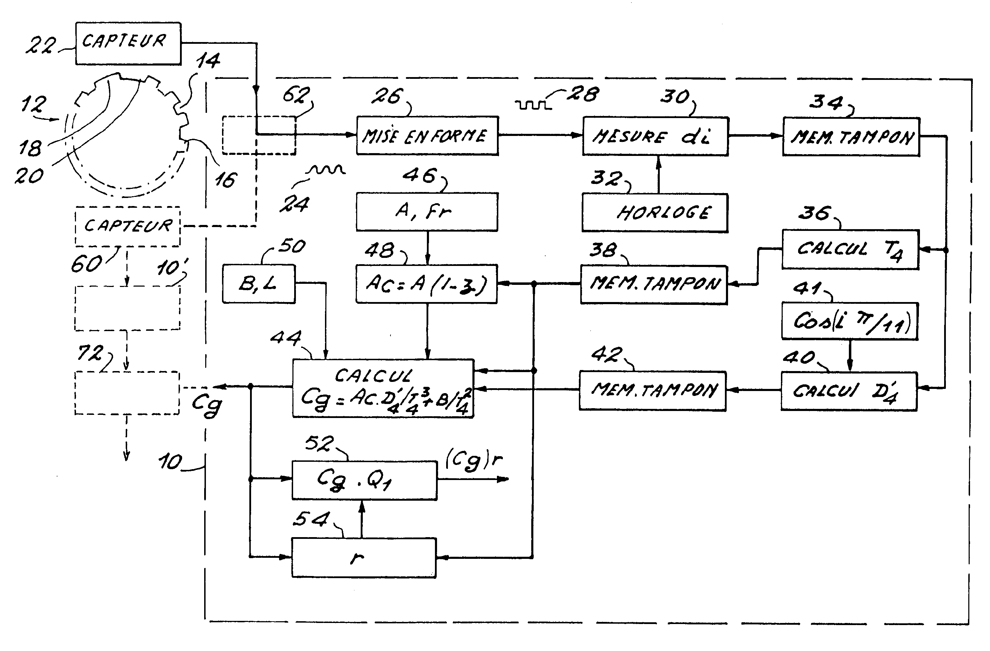

Pour permettre la compréhension de la présente invention, il est nécessaire de décrire, en relation avec la figure 1, le dispositif ou système de calcul de la valeur Cg représentative du couple gaz moyen par combustion correspondant à la demande de brevet français précitée.

Sur cette figure 1, est représenté le circuit 10 de mesure du couple gaz moyen Cg, produit par chaque combustion du mélange gazeux dans un moteur thermique à quatre temps (t=4) et à quatre cylindres (k=4), équipé d'une couronne de mesure dentée 12, solidaire du volant d'inertie, par exemple la couronne de type standard montée sur les moteurs à allumage électronique.

A titre d'exemple, la couronne 12 comporte sur sa périphérie trente-huit dents identiques, telles que celles référencées 14 et 16, qui sont réparties en deux séries de dix-neuf dents séparées par deux dents de référence, telles que celles référencées 18 et 20, qui sont diamétralement opposées et qui ont une largeur triple de celle des autres dents. En fait, la couronne comporte :

$n = 2 \times 19 + 2 \times 3 = 44$ repères équidistants appelés dents réelles ou virtuelles de même module dont deux sont diamétralement opposées pour servir de référence ou d'origine d'indexation permettant de numéroter les dents et, notamment de déterminer la dent $d_o$ qui sera définie ci-après.

A la couronne 12 est associé un capteur fixe 22, par exemple à réluctance variable, adapté à délivrer un signal alternatif 24 de fréquence proportionnelle à la vitesse de défilement des dents de la couronne, c'est-à-dire proportionnelle à la vitesse instantanée du volant.

La position angulaire de ce capteur 22 par rapport aux dents d'indexation 18 au moment où le piston est au point mort haut est connue ou relevée, ce qui permet de déterminer la dent $d_o$ comme étant celle qui défile devant le capteur pendant le passage du piston du cylindre concerné à son point mort haut de combustion.

Le signal, délivré par le capteur 22, est appliqué à l'entrée d'un circuit de mise en forme 26, adapté à délivrer des signaux 28 à fronts raides, de durée égale à la période instantanée $d_i$ des signaux incidents 24 l'indice i variant de 0 à 21 au fur et à mesure que les dents défilent devant le capteur. Chaque période $d_i$ du signal ainsi produit correspond à la durée de passage d'une dent, soit un plein et un creux, devant le capteur 22. Pour ce qui concerne les signaux incidents produits par les dents d'indexation 18, le circuit de mise en forme 26 les transforme de la même façon en un signal à flancs raides, de durée sensiblement triple de celle des signaux afférents aux autres dents (14, 16). Les signaux 28 sont appliqués à un étage 30 de mesure et de calcul des périodes instantanées $d_i$ de défilement des dents réelles et virtuelles de la couronne de mesure 12 devant le capteur 22.

A cet effet, à titre d'exemple de réalisation de l'étage 30, un compteur reçoit de façon continue des impulsions chronométriques de fréquence élevée (1 à 20 MHz, par exemple), produites par une horloge 22, par exemple, à quartz, et il délivre en sortie, des valeurs numériques représentatives des nombres d'impulsions d'horloge comptées, donc de la "date" (modulo débordement du compteur) de chaque transition creux-plein des signaux à fronts raides, produits par l'étage de mise en forme 26. Ce compteur transmet alternativement la "date" $t_{i-1}$ qu'il contient à un premier registre et la date suivante $t_i$ à un second registre. Ces deux registres sont suivis par un étage de calcul adapté à calculer la durée $d_i = (t_i - t_{i-1})$ de la dent d'indice i et à en adresser le résultat à une mémoire-tampon 34. De la sorte, aucune impulsion d'horloge n'est perdue et l'erreur de mesure des durées $d_i$ est minimisée.

Pour ce qui est du traitement de chaque signal 28 produit par l'une des dents longues d'indexation 18, 20 dans le cadre de l'exemple décrit sa valeur sera divisée par trois et le résultat, affecté aux trois dents virtuelles correspondantes avec, le cas échéant, prise en compte des restes. De la sorte, l'étage 30 de mesure et de calcul des périodes $d_i$, adresse à la mémoire-tampon 34, des séries successives de $n_c = n/2$ (soit 22 dans le cas de l'exemple décrit) valeurs numériques $d_i$, respectivement associées à $n/2$ coefficients de pondération contenus dans une mémoire permanente 41 et définis par le rang i de la dent réelle ou virtuelle concernée.

Dans le cas du moteur à quatre temps et quatre cylindres de l'exemple, à chaque demi-tour du volant, les valeurs numériques contenues dans la mémoire-tampon 34 sont remises à jour. Les valeurs $d_i$, ainsi mémorisées en 34, à la fin d'un demi-tour de combustion-détente (dans l'exemple décrit), sont appliquées à un étage de calcul 36, adapté à calculer la durée $T_4$ (l'indice 4 correspond aux quatre combustions par cycle) de chaque demi-tour du volant, en accord avec la relation

$$T_4 = \sum_{0}^{21} d_i$$

La dernière valeur numérique $T_4$ calculée dans l'étage 36 est appliquée à une mémoire-tampon 38 et elle y demeure jusqu'à ce qu'elle soit remplacée par la suivante. La vitesse angulaire moyenne du volant d'inertie de la phase combustion-détente qui vient de s'achever, est $\Omega_m = \pi/T_4$.

Les valeurs $d_i$ mémorisées en 34, sont également appliquées à un autre étage de calcul 40, adapté à réaliser, sous forme numérique, une détection angulaire synchrone d'une projection notée $D_4 \cos\Phi'4$ du terme alternatif fondamental de $d_i$, rapportée à une position de référence de phase constituée par la première dent d'indice i = O soit $d_0$ de la série de $n/2 = 22$ dents affectée à un cylindre donné. Pour ce faire, l'étage 40 est adapté à calculer :

$$D_4 \cos\Phi'4 = (1/11) . \sum_{0}^{21} d_i . \cos(i\pi/11)$$

et à l'appliquer à une mémoire-tampon 42.

Les $n/2$ facteurs de pondération (soit 22 dans l'exemple décrit) de l'expression visée ci-dessus, sont constitués par les onze valeurs successivement prises deux fois, mais avec des signes opposés, par le terme $(\cos i\pi/11)$ lorsque le rang i de la dent concernée varie de 0 à 10 puis de 11 à 21. Ces valeurs sont stockées dans la mémoire permanente 41, associée à l'étage de calcul 40. Le terme $\delta\Theta$ étant le pas angulaire nominal des dents de la couronne de mesure 12 (dans l'exemple décrit ici $\delta\Theta = \pi/22$), la vitesse angulaire instantanée $\Omega_i$ du volant est $\Omega_i = \delta\Theta/d_i$. La valeur projetée sur l'axe de référence de la composante alternative fondamentale $E_4$ de $\Omega_i$ est :

$$E_4 \cos\Phi_4 = (1/11) . \sum_{0}^{21} \Omega_i . \cos(i\pi/11)$$

En remplaçant $\Omega_i$ par sa valeur $\delta\Theta/d_i$ et en tenant compte du fait que $d_i$ varie peu autour de sa valeur moyenne $d_m = T_4/22$ dans l'exemple, on démontre que :

$$E_4\cos\Phi_4 = -(\Omega_m^2 / \delta\Theta).D_4\cos\Phi'_4$$

et que :

$$Cg = -a.\Omega_m.E_4\cos\Phi_4 + b.\Omega_m^2$$

Si les dents $(\delta\Theta_i)$ ne sont pas régulièrement disposées sur la couronne, on démontre qu'il apparaîtra un terme proportionnel à $\Omega_m$ dans $E_4\cos\Phi_4$ mais ce terme n'est pas gênant car son influence dans Cg sera proportionnelle à $\Omega_m^2$ et pourra être compensée en modifiant la valeur du coefficient b.

De la sorte, si on décompose en série de Fourier les deux termes $d_i$ et $\Omega_i$ et si on fait sous forme numérique une détection synchrone d'une projection de leur composante alternative fondamentale, on obtiendra $D\cos\Phi'$ et $E\cos\Phi$ qui sont deux variables dépendantes. Dans l'exemple décrit d'un moteur à quatre temps et à quatre cylindres, soit deux combustions par tour de volant et donc quatre combustions par cycle de fonctionnement du moteur, ce qui est rappelé par l'indice 4 utilisé, la composante alternative de valeur $E_4\cos\Phi_4$ de $\Omega_i$ est reliée à la composante alternative de valeur $D_4\cos\Phi'_4$ de $d_i$ par la relation

$$E_4\cos\Phi_4 = -\Omega_m^2.(22/\pi).D_4\cos\Phi'_4$$

Comme l'étude expérimentale visée plus haut l'a montré pour les bas régimes du moteur,

$$Cg = -a.\Omega_m.E'_4 + b.\Omega_m^2 = a.\Omega_m^3.(22/\pi).D'_4 + b.\Omega_m^2$$

en posant $E'_4 = E_4\cos\Phi_4$ et $D'_4 = D_4\cos\Phi'_4$
Comme $\Omega_m = \pi/T_4$ on a :

$$Cg = A.D'_4/T_4^3 + B/T_4^2$$

ce qui est l'expression cherchée avec

$$T_4 = \sum_0^{21} d_i \quad et \quad D'_4 = (1/11).\sum_0^{21} d_i.\cos(i\pi/11)$$

les termes A et B étant des constantes propres soit au moteur concerné, soit à tous ceux de son type.

En pratique, ces constantes A et B sont déterminées par une mesure du couple du moteur en deux points particuliers ou éventuellement, par une analyse statistique (méthode des moindres carrés) d'un grand nombre de mesures réalisées en laboratoire sur un moteur de référence, conforme à la série des moteurs auxquels est destiné le modèle de couplemètre selon l'invention. En conséquence de ce qui précède, dans le cadre de l'exemple décrit, les grandeurs $T_4$ et $D'_4$, respectivement élaborées dans les étages de calcul 36 et 40, sont, à la fin de chaque demi-tour du volant d'inertie du moteur, (synchronisé par au moins une dent d'indexation par cycle moteur), appliquées à un étage de calcul 44 qui élabore Cg, à partir de ces deux grandeurs d'entrée $T_4$ et $D'_4$ et des constantes A et B mémorisées à cet effet, le terme A étant préalablement corrigé avant usage pour être applicable aux hauts régimes du moteur.

En effet, comme cela a été indiqué plus haut, la relation ci-dessus $Cg = A.D'_4/T_4^3 + B/T_4^2$ n'est valable en toute rigueur que pour les bas régimes du moteur. Pour les hauts régimes, une correction du terme A est nécessaire. Pour ce faire, dans le cas d'une couronne 12 solidaire du volant d'inertie, un étage de calcul complémentaire 48 est prévu qui élabore un terme corrigé $Ac = A(1-z)$ avec $z = (fi/fr)^2$, à partir de la valeur de A stockée dans une mémoire permanente 46, de la valeur $T_4$ fournie par la mémoire-tampon 38 (fi = $1/T_4$ = fréquence demi-tour, dans l'exemple décrit) et d'un terme fr (fréquence de résonance en torsion de la liaison vilebrequin/volant) également stocké dans la mémoire 46. Le terme corrigé Ac est appliqué au calculateur 44 qui reçoit $T_4$ de la mémoire-tampon 38, B de la mémoire permanente 50 et $D'_4$ de la mémoire-tampon 42 et qui calcule le couple gaz moyen sur un demi-tour, selon la relation, valable à tous les régimes du moteur

$$Cg = Ac.D'_4/T_4^3 + B/T_4^2$$

Dans le but d'obtenir une estimation plus précise de Cg, les coefficients A et B peuvent être identifiés par zone de fonctionnement moteur; ils peuvent aussi être rendus dépendants des réglages moteur, par exemple la richesse r, le taux de recirculation des gaz d'échappement (RGE).

Mais une autre façon de faire est de maintenir A et B constants, ce qui permet d'obtenir une première valeur brute de Cg puis, soit de faire intervenir une cartographie de correction (de type additif), soit d'appliquer des termes correctifs de façon à affiner la valeur de Cg. Quelques exemples pratiques de correction seront décrits ci-après.

Dans le cas d'un moteur fonctionnant en mélange pauvre (richesse carburant/air, r<1) avec r non constant, l'étage de calcul 44 qui fournit Cg est, le cas échéant, suivi par un étage de calcul additionnel 52 qui calcule la valeur corrigée de Cg en fonction de cette richesse r, lorsque r<1. Dans ce cas, les valeurs de r en fonction du régime du moteur déduit de $T_4$ et du couple Cg produit, peuvent être mesurées au moyen d'un capteur prévu à cet effet ou encore avoir été relevées en laboratoire et leur cartographie pour chaque type de moteurs concernés (diesel en particulier), stockée dans une mémoire permanente 54. En fonction des valeurs $T_4$ et Cg appliquées en adresse à la mémoire 54, la valeur r à retenir est entrée dans l'étage de calcul 52 si r<1. Celui-ci détermine tout d'abord un facteur de correction $Q_1 = [1+p_1(r-1)]$, avec $p_1$ proche de + 0,5, puis en affecte Cg pour produire une mesure

$(Cg)_r = Cg.Q_1$, corrigée par le facteur $Q_1 < 1$, fonction de la richesse r du mélange lorsque r<1.

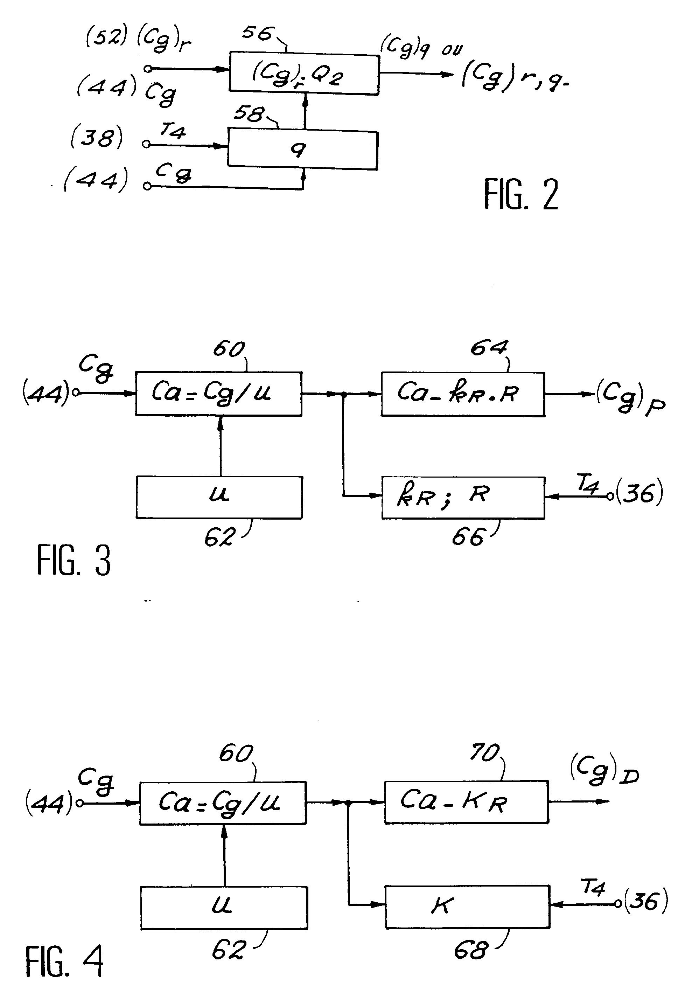

Selon la présente invention, en plus de cet étage optionnel 52, un autre étage de calcul additionnel 56 (figure 2) est prévu pour corriger le terme Cg en fonction du taux total q de recirculation des gaz d'échappement (RGE) et de présence des gaz brûlés résiduels (GBR) dans les cylindres du moteur. Ce taux q est toujours petit par rapport à l'unité et sa valeur sera soit mesurée au moyen d'un capteur particulier prévu à cet effet (non représenté), soit prélevée dans une mémoire permanente 58 contenant une cartographie déterminée en laboratoire en fonction des variables d'entrée concernées et notamment du régime du moteur déduit de $T_4$ et de la valeur Cg calculée. En fonction des valeurs $T_4$ et Cg, appliquées en adresses à la mémoire 58, la valeur q à retenir est entrée dans l'étage de calcul 56 qui élabore un facteur de correction $Q_2 = (1-p_2.q)$, avec $p_2$ proche de 0,5, puis on affecte Cg ou $(Cg)_r$ pour produire un couple $(Cg)_q$ corrigé en fonction de q ou $(Cg)_{r,q}$ corrigé en fonction de r et de q.

Une solution autre que celle décrite dans la demande de brevet précitée de la demanderesse est possible pour effectuer les corrections afférentes au fonctionnement d'un moteur alimenté avec excès de comburant (air) et donc fonctionnant en gaz pauvre (r<1).

En effet, pour les moteurs à essence fonctionnant en mélange pauvre à richesse non constante ou pour les moteurs Diesel fonctionnant toujours avec excès d'air, le rapport entre Cg, le couple gaz moyen produit par chaque combustion, et Ca, le couple gaz alternatif à la fréquence des combustions, n'est plus constant. Toutefois, la connaissance de la façon dont il évolue permet d'effectuer la correction nécessaire (correction excès d'air ou correction de remplissage) pour passer de la valeur de Ca, qui va être effectivement mesurée, à la valeur Cg corrigée qui est recherchée.

Tout d'abord, en plein gaz pour tous moteurs, le total des taux (RGE + GBR) est minimal et par ailleurs, dans le cas des moteurs à essence r>1 et dans celui des moteurs Diesel, r est maximale. Donc, en plein gaz, les corrections de richesse r du mélange et de gaz brûlés (RGE + GBR) sont minimales. Si on les néglige, on retrouve le cas $C_g/Ca$ = constante de la demande de brevet précitée et on peut écrire $u.(Ca)_{p.g.} = (Cg)_{p.g.}$ quel que soit N, avec les indices p.g. signifiant "plein gaz" et le terme N, le nombre de tours/minute du moteur. Cette relation permet, comme on l'a vu plus haut, d'identifier les termes A et B de l'expression définissant Cg c'est-à-dire

$$Cg = Ac.D'_4/T_4^3 + B/T_4^2 \text{ (étage 44)}$$

par les mesures de deux points "plein gaz" pris à deux régimes différents. Quant au coefficient u, il doit être déterminé à partir de mesures de pressions de chambres de combustion sur un moteur de chaque type : $u = (Cg/Ca)_{p.g.}$, le terme u est constant au premier ordre, quel que soit N.

En plein gaz et avec r>1, le remplissage R des cylindres est proportionnel à Ca (ou Cg) au premier ordre, ce qui explique (voir ci-après) que le rapport $u = (Cg/Ca)$p.g. soit sensiblement constant quel que soit N en plein gaz. Hors le cas du plein gaz, en faisant fonctionner le moteur en charge partielle à plusieurs régimes, on a constaté expérimentalement que $(Cg)_p = Ca - k_R.R$, avec $k_R$, un terme constant au premier ordre et R, le remplissage du cylindre en phase compression. Le terme R représente le poids total du mélange gazeux dans le cylindre (carburant, comburant, gaz brûlés résiduels ou recyclés). Il peut être estimé à partir d'une cartographie mise en mémoire et/ou de mesures faites par les capteurs adéquats déjà installés sur le moteur. Le terme $k_R$ est, à tous régimes N et à toutes charges, une constante au premier ordre que l'on peut identifier,en particulier, en plein gaz (p.g.) par la relation :

$$k_R = (1 - u).(Ca)_{p.g.}/R_{p.g.}$$

Quant au calcul de Ca, il reste inchangé en charge partielle :

$$Ca = cg/u = \frac{1}{u}.(Ac.D'_k/T_k^3 + B/T_k^2)$$

La figure 3 représente le schéma fonctionnel des circuits complémentaires d'un dispositif de mesure du couple gaz moyen par combustion, assurant la correction de remplissage en cas de fonctionnement en mélange pauvre à richesse non constante. Selon la figure 3, les circuits 52 à 58 des figures 1 et 2 sont remplacés par des circuits 60 à 66. Le circuit de calcul 60 reçoit de l'étage 44, un signal Cg non corrigé : $Cg = A.D'_k/T_k^3 + B/T_k^2$ et d'une mémoire 62, le coefficient u. Le circuit 60 calcule un terme intermédiaire $ca = cg/u$ et le résultat est appliqué à un autre étage de calcul 64. Une mémoire 66 contient le terme $k_R$ visé ci-dessus et, en outre, la cartographie des remplissages R, exprimés à partir de grandeurs disponibles, calculées ou mesurées par des capteurs adéquats. La mémoire 66 applique les valeurs $k_R$ et R au circuit de calcul 64 qui produit un signal de mesure du couple gaz moyen par combustion d'un moteur fonctionnant en mélange

pauvre :

$$(Cg)_p = Ca - k_R.R = \frac{1}{u}.(Ac.D'_k/T_k^3 + B/T_k^2) - k_R.R$$

Dans le cas d'un moteur Diesel, le remplissage est constant au premier ordre et l'expression de cg en fonction de ca se ramène à $(cg)_D = ca - k_R$, le terme $k_R$ étant une constante au premier ordre mais, pour plus de précision, $k_R$ peut être cartographiée. De la sorte, pour un moteur Diesel, le couple gaz moyen par combustion est :

$$(Cg)_D = \frac{1}{u}.(Ac.D'_k/T_k^3 + B/T_k^2 - K_R.$$

La figure 4 représente le schéma des modifications qui découlent de ce qui précède. Selon la fig.4, les circuits 64-66 de la fig.3 sont remplacés par des circuits 68-70. Le circuit 68 est une mémoire qui contient la constante $K_R$ ou sa cartographie et le circuit 70, un étage de calcul qui produit le signal de mesure $(Cg)_D = Ca - K_R$, applicable aux moteurs Diesel.

Les différents étages de calcul visés ci-dessus sont, au fur et à mesure de leur intervention dans le processus décrit, constitués par un microprocesseur opérant sous la dépendance d'un logiciel d'application L développé à cet effet et contenu dans la mémoire permanente 50. Une autre manière de faire est, bien entendu, de réaliser au moins une partie des opérations prévues, au moyen d'un calculateur électronique analogique dont les différents étages assurent chacun une fonction particulière.

L'ensemble des circuits représentés peut être réalisé sous forme de circuit intégré ou de circuit hybride, spécifique du problème à résoudre.

Dans l'exemple décrit ci-dessus, le moteur concerné est un moteur à essence à quatre temps et à quatre cylindres et le nombre de repères réels ou virtuels de la couronne de mesure est 44. L'invention n'est, bien entendu, pas limitée à cet exemple particulier. Elle concerne en effet tous les moteurs thermiques à combustion interne quel qu'en soit le type : à quatre temps, à deux temps, à essence, à gazole (diesel) ou à tout autre carburant et quel que soit le nombre de cylindres ou le nombre de repères de la couronne de mesure.

Si l'on désigne par t, le nombre de temps par cycle de fonctionnement du moteur, par k, le nombre de ses cylindres et par n, le nombre de repères réels ou virtuels de la couronne de mesure, le nombre de repères qui correspond à chacune des périodes angulaires $(\pi t/k)$ des combustions dans le moteur et qui sera pris en compte pour la détection angulaire synchrone de la vitesse angulaire instantanée à la fréquence des combustions est $n_c = n.t/(2.k)$, ce qui donne combustion par combustion et donc cylindre par cylindre :

$$T_k = \sum_{o}^{(n_C-1)} d_i.$$

Dans ces conditions, le terme :

$$D_4 cos\Phi'4 = (1/11).\sum_{o}^{21} d_i.cos(i.\pi/11) = D'_4$$

visé ci-dessus, s'écrit sous la forme généralisée :

$$D_k cos\Phi'k = (2/n_C).\sum_{o}^{(n_C-1)} d_i.cos(i.2\pi/n_C) = D'_k$$

L'invention a été décrite en relation avec un exemple particulier de réalisation qui fait appel aux variables intermédiaires $d_i$, $T_4$ et $D'_4$ et dans lequel les calculs de $d_i$, $T_4$ et $D'_4$ étaient effectués de manière numérique mais le calcul de Cg et de ses corrections peut être réalisé par des circuits analogiques classiques.

Ainsi, le signal primaire 24 dont la fréquence est modulée par les variations de vitesse $\Omega$, contient le vecteur E à la fréquence $f_i$. Pour extraire le vecteur E et plus précisément sa projection $Ecos\Phi$, il faut utiliser un convertisseur fréquence-tension suivi d'un détecteur synchrone angulaire à la fréquence $f_i$ avec une phase convenable puis calculer :

$$Cg = -a.\Omega_m.Ecos\Phi + b.\Omega_m^2$$

L'invention a été décrite en référence à des dispositifs de correction mais elle concerne aussi des procédés de correction de la valeur Cg en fonction de certaines caractéristiques de fonctionnement du moteur.

Les opérations de ces procédés découlent de manière évidente de la description des dispositifs de correction faite en relation avec les figures 2, 3 et 4 et ne seront donc pas décrites de manière séparée.

**Revendications**

1. Système de mesure de la valeur numérique Cg, représentative du couple gaz moyen par combustion du mélange gazeux dans les k cylindres d'un moteur à combustion interne comportant t temps par cycle de fonctionnement, ledit système comprenant:
   - un nombre n de repères de mesure (14-16) qui sont disposés sur une couronne (12) solidaire du volant d'inertie du moteur ou solidaire du vilebrequin;
   - des moyens (18-20) pour définir au moins une référence d'indexation des repères (14-16);
   - un capteur (22) de défilement des repères, monté fixe au voisinage de la couronne (12);
   - des moyens de calcul (26-30-32) pour produire une valeur numérique primaire $d_i$ représentative de la durée instantanée de défilement devant le capteur (22) de chacun des repères (14-16) réels ou virtuels;
   - des moyens de traitement numérique de la valeur numérique primaire $d_i$ comprenant, notamment, une unité de calcul (36-40-44), un logiciel d'application (L), des mémoires permanentes (41-46-50) et des mémoires temporaires (34-38-42)
   - l'ensemble de ces moyens de calcul et de traitement numérique étant organisé pour constituer en temps opportun :
   - des moyens de calcul (36) pour élaborer à partir de la valeur numérique primaire $d_i$, une première valeur numérique secondaire $T_k$ représentative de la durée totale de défilement devant le capteur (22) de chaque série de $n_c$ repères (14-16), afférente à la période angulaire d'une combustion dans le moteur, avec $n_c = (n.t/2.k)$ et

$$T_k = \sum_{o}^{(n_C-1)} d_i$$

   - des moyens de calcul (40) pour élaborer, à partir de la valeur numérique primaire $d_i$ et de facteurs de pondération $\cos(i.2\pi/n_c)$ stockés dans une mémoire permanente (41), une seconde valeur numérique secondaire $D_k\cos\Phi'_k$ représentative de la projection, sur une ligne de référence de phase des repères (14-16) correspondant à l'origine des périodes angulaires des combustions, de l'amplitude de la composante alternative des durées instantanées $d_i$ de défilement devant le capteur (22) des repères de mesure (14-16), à la fréquence des combustions dans le moteur avec

$$D_k\cos\Phi'_k = (2/n_C) . \sum_{o}^{(n_C-1)} d_i . \cos(i.2\pi/n_C) .$$

   - des moyens de calcul (44) pour élaborer la valeur numérique recherchée Cg, défini par la relation
   $Cg = A.(D_k\cos\Phi'_k)/T_k^3 + B/T_k^2 = A. D'_k/T_k^3 + B/T_k^2$
   à partir des deux valeurs numériques secondaires $D_k\cos\Phi'_k$ et $T_k$ et de deux constantes A et B expérimentalement déterminées et stockées dans les mémoires permanentes (46-50),
   caractérisé en ce que ledit système comprend, en outre, un dispositif de correction de la valeur numérique Cg en fonction du taux total q de recirculation des gaz d'échappement (RGE) et des gaz brûlés résiduels (GBR), ledit dispositif de correction comprenant des moyens de calcul (56) pour produire un facteur de correction $Q_2 = (1-p_2.q)$, dans lequel $p_2$ est une constante proche de 0,50 à déterminer expérimentalement et q, la valeur dudit taux total, puis appliquer ce facteur $Q_2$ à la valeur Cg, le cas échéant préalablement corrigée en fonction de la richesse r du mélange gazeux, pour fournir une valeur numérique corrigé $(Cg)_q$ ou $(Cg)_{r,q}$.

2. Système selon la revendication 1, caractérisé en ce que dans ledit dispositif de correction, les valeurs du taux total q, afférentes à un type donné de moteurs, sont mesurées ou cartographiées notamment en fonction du couple cg produit et du régime moteur déduit de $T_k$ puis stockées dans une mémoire permanente (58) associée aux moyens de calcul (56).

3. Système selon le préambule de la revendication 1, caractérisé en ce que ledit système comprend, en outre, un dispositif de correction de la valeur numérique cg dans le cas d'un moteur fonctionnant avec excès de comburant, c'est-à-dire dans le cas d'un mélange gazeux pauvre, r<1 dans les cylindres pour obtenir une valeur corrigée $(cg)_p$, ledit dispositif de correction comprenant:
   - des moyens de calcul (60) sont prévus pour produire une valeur intermédiaire ca=cg/u, avec u<1, une constante mémorisée (62), déterminée expérimentalement;
   - des moyens de calcul (64) sont prévus pour produire la valeur recherchée $(cg)_p = Ca-k_R.R$, avec $k_R$ une constante mémorisée (66) déterminée expérimentalement et R, le remplissage des cylindres, déterminé expérimentalement en fonction de grandeurs déjà calculées ou mesurées, et formant une cartographie mémorisée (66).

4. Système selon le préambule de la revendication 1, caractérisé en ce que ledit système comprend, en outre, un dispositif de correction de la valeur numérique cg dans le cas d'un moteur Diesel pour obtenir une valeur corrigée $(Cg)_D$, ledit dispositif de correction comprenant:
   - des moyens de calcul (60) sont prévus pour produire une valeur intermédiaire Ca = Cg/u, avec u<1, une constante mémorisée (62), déterminée expérimentalement;
   - des moyens de calcul (70) sont prévus pour produire la valeur recherchée $(Cg)_D = Ca-K_R$, avec $K_R$, une valeur déterminée expérimentalement, mémorisée (68) comme une constante ou mieux comme une cartographie, en fonction de grandeurs déjà calculées ou mesurées.

5. Procédé de correction de la valeur numérique Cg, représentative du couple gaz moyen par combustion et obtenue à l'aide du système du préambule de la revendication 1, en fonction du taux total q de recirculation des gaz d'échappement et des gaz brûlés résiduels dans les cylindres du moteur, caractérisé en ce qu'il comprend les opérations suivantes:
   (e1) produire un facteur de correction $Q_2 = (1-p_2.q)$, dans lequel $p_2$ est une constante proche de 0,50 à déterminer expérimentalement et q, la valeur dudit taux total, puis
   (e2) appliquer ce facteur $Q_2$ à la valeur de mesure Cg, le cas échéant préalablement corrigé en fonction de la richesse r du mélange gazeux quand r<1,, pour fournir une valeur numérique corrigée $(Cg)_q$ ou $(Cg)_{r,q}$.

6. Procédé selon la revendication 5, caractérisé en ce que les valeurs du taux total q, afférentes à un type donné de moteurs, résultent d'une opération de mesure ou de cartographie notamment en fonction du couple (Cg) produit et du régime du moteur déduit de $T_k$.

7. Procédé de correction de la valeur numérique Cg, représentative du couple gaz moyen par combustion et obtenue à l'aide du système tel que défini dans le préambule de la revendication 1, caractérisé en ce que, pour produire une valeur de mesure du couple gaz moyen par combustion $(Cg)_p$ afférent à un moteur fonctionnant avec excès de comburant c'est-à-dire d'un mélange gazeux pauvre (r<1) dans les cylindres, il comprend, en outre, les opérations suivantes :
   (g) calcul (60) pour produire une valeur intermédiaire Ca=Cg/u, avec u<1, une constante mémorisée (62), déterminée expérimentalement;
   (h) calcul (64) pour produire la valeur recherchée $(Cg)_p = Ca-k_R.R$, avec $k_R$ une constante mémorisée (66) déterminée expérimentalement et R, le remplissage des cylindres, déterminé expérimentalement en fonction de grandeurs déjà calculées ou mesurées, et formant une cartographie mémorisée (66).

8. Procédé de correction de la valeur numérique Cg, représentative du couple gaz moyen par combustion et obtenue à l'aide du système tel que défini dans le préambule de la revendication 1, caractérisé en ce que, pour produire une valeur de mesure du couple gaz moyen par combustion d'un moteur Diesel, $(Cg)_D$, il comprend, en outre, les opérations suivantes :
   (i) calcul (60) pour produire une valeur intermédiaire Ca = Cg/u, avec u<1, une constante mémorisée (62), déterminée expérimentalement;
   (j) calcul (70) pour produire la valeur recherchée $(Cg)_D = Ca-k_R$, avec $K_R$, une valeur déterminée expérimentalement, mémorisée (68) comme une constante ou mieux comme une cartographie, en fonction de grandeurs déjà calculées ou mesurées.

**Claims**

1. System for measuring the numerical value Cg representing the average gas torque per combustion of the gaseous mixture in the k cylinders of an internal combustion engine, including t time per operating cycle, said system comprising:
   - a number n of measuring markers (14 - 16) which are disposed on a ring gear (12) integral with the inertial flywheel of the engine, or integral with the crankshaft;
   - means (18 - 20) for defining at least one indexation reference for the markers (14 - 16);
   - a sensor (22) for sensing the passing by of the markers, mounted in a fixed manner adjacent to the ring gear (12);
   - calculating means (26-30-32) for producing a primary numerical value $d_i$ representing the instantaneous duration of passing by of each of the actual or virtual markers (14 - 16) in front of the sensor (22);
   - means for numerical processing of the primary numerical value $d_i$ comprising in particular a calculating unit (36-40-44), application software (L), permanent memories (41-46-50) and temporary memories (34-38-42)
   - all of these calculating and processing means being organised to form, at the appropriate time,
   - calculating means (36) for forming from the primary numerical value $d_i$ a first secondary numerical value $T_k$ representing the total duration of the passing by of each series of $n_c$ markers (14 - 16) in front of the sensor (22), relating to the angular period of a combustion in the engine, with $n_c = $ (n. t/2 . k) and

$$T_k = \sum_{0}^{(n_c-1)} d_i$$

   - calculating means (40) for forming, from the primary numerical value di and from weighting factors $\cos(i . 2\pi/n_C)$ stored in a permanent memory (41), a second secondary numerical value $D_k\cos\phi'_k$ representing the projection on a line of phase reference of the markers (14 - 16) corresponding to the origin of the angular periods of the combustions, of the amplitude of the alternative component of the instantaneous durations $d_i$ of the passing by of the measuring markers (14 - 16) in front of the sensor (22), to the frequency of the combustions in the engine, with

$$D_k\cos\Phi'_k = (2/n_c) . \sum_{0}^{(n_c-1)} d_i.\cos(i . 2\pi/n_c).$$

   - calculating means (44) for forming the numerical value Cg sought, defined by the relationship
   $$Cg = A . (D_k\cos\phi'_k/T^3_k + B/T^3_k = A. D'_k/T^3_k + B/T^2_k$$
   from the two secondary numerical values $D_k\cos\phi'_k$ and $T_k$ and two constants A and B determined experimentally and stored in the permanent memories (46 - 50),
   characterised in that said system furthermore comprises a device for correcting the numerical value Cg according to the total amount q of recirculation of exhaust gases (RGE) and of residual burned gases (GBR), said correcting device comprising calculating means (56) for producing a correction factor $Q_2 = (1-p_2 \cdot q)$, where $p_2$ is a constant close to 0.50 to be determined experimentally and q is the value of said total amount, and then to apply this factor $Q_2$ to the value Cg, where appropriate previously corrected according to the richness r of the gaseous mixture, to give a corrected numerical value $(Cg)_q$ or $(Cg)_{r,q}$.

2. System according to claim 1, characterised in that in said correcting device the values of the total amount q, relating to a given type of engine, are measured or mapped particularly according to the torque Cg produced and to the capacity range of the engine derived from $T_k$, then stored in a permanent memory (58) associated with the calculating means (56).

3. System according to the preamble of claim 1, characterised in that said system furthermore comprises a device for correcting the numerical value Cg in the case of an engine operating with an excess of com-

11

bustible, that is to say in the case of a lean gaseous mixture r<1 in the cylinders, to obtain a corrected value $(Cg)_p$, said correction device comprising:

- calculating means (60) provided for producing an intermediate value Ca=Cg/u, where u<1 is a memorised constant (62), determined experimentally;
- calculating means (64) provided for producing the value sought $(Cg)_p$ = Ca-$k_R$ . R, where $k_R$ is a memorised constant (66) determined experimentally and R is the degree of filling of the cylinders, determined experimentally according to the magnitudes already calculated or measured, forming a memorised mapping (66).

4. System according to the preamble of claim 1, characterised in that said system furthermore comprises a device for correction of the numerical value Cg in the case of a diesel engine, to obtain a corrected value $(Cg)_D$, comprising:

- calculating means (60) provided for producing an intermediate value Ca = Cg/u, where u<1 is a memorised constant (62) determined experimentally;
- calculating means (70) provided for producing the value sought $(Cg)_D$ = Ca -$K_R$, where $K_R$ is a value determined experimentally, memorised (68) as a constant or preferably as a mapping, according to magnitudes already calculated or measured.

5. Method for correction of the numerical value Cg representing the average gas torque per combustion and obtained with the aid of the system according to the preamble of claim 1, according to the total amount q of recirculation of exhaust gases and of residual burned gases in the engine cylinders, characterised in that it comprises the following operations:

(e1) producing a correction factor $Q_2 = (1 - p_2 . q)$, in which $p_2$ is a constant close to 0.50 to be determined experimentally, and q is the value of said total amount, then

(e2) applying this factor $Q_2$ to the measured value Cg, where appropriate previously corrected according to the richness r of the gaseous mixture when r<1, in order to provide a corrected numerical value $(Cg)_q$ or $(Cg)_{r,q}$.

6. Method according to claim 5, characterised in that the values of the total amount q relating to a given type of engine, are the result of a measuring or mapping operation, particularly according to the torque (Cg) produced and to the capacity range of the engine derived from $T_k$.

7. Method for correcting the numerical value Cg representing the average gas torque per combustion and obtained with the aid of the system as defined in the preamble of claim 1, characterised in that to produce a measured value of the average gas torque per combustion (Cg) relating to an engine operating with a surplus of combustible, that is to say of a lean gaseous mixture (r<1) in the cylinders, it furthermore comprises the following operations:

(g) calculation (60) to produce an intermediate value Ca = Cg/u, where u<1 is a memorised constant (62) determined experimentally;

(h) calculation (64) to produce the value sought $(Cg)_p$ = Ca - $k_R$. R. where $k_R$ is a memorised constant determined experimentally and R is the degree of filling of the cylinders, determined experimentally according to magnitudes already calculated or measured, forming a memorised mapping (66).

8. Method for correcting the numerical value Cg, representing the average gas torque per combustion and obtained with the aid of the system as defined in the preamble of claim 1, characterised in that to produce a measured value of the average gas torque per combustion of a diesel engine $(Cg)_D$, it furthermore comprises the following operations:

(i) calculation (60) to produce an intermediate value Ca = Cg/u, where u<1 is a memorised constant (62) determined experimentally; (j) calculation (70) to produce the value sought $(Cg)_D$ = Ca - $K_R$ where $K_R$ is a constant determined experimentally, memorised (68) as a constant or preferably as a mapping, according to magnitudes already calculated or measured.

**Patentansprüche**

1. System zur Messung des das mittlere Drehmoment darstellenden numerischen Wertes Cg pro Verbrennung des Gasgemisches in den k Zylindern eines Verbrennungsmotors mit t Arbeitszyklen, wobei das System aufweist:

- eine Anzahl n Meßmarkierungen (14-16), die an einem Kranz (12) vorgesehen sind, welcher fest mit dem Schwungrad oder der Kurbelwelle des Motors verbunden ist;
- eine Anordnung (18-20), um wenigstens eine Anzeigereferenz der Markierungen (14-16) zu bilden;
- einen Vorbeilauffühler (20) für die Markierungen, der fest in der Nähe des Kranzes (12) angeordnet ist;
- eine Rechenanordnung (26-30-32) zur Erstellung eines numerischen Primärwertes $d_i$ der Momentandauer des vorbeilaufs vor dem Fühler (22) einer jeden reellen oder virtuellen Markierung (14-16);
- eine numerische Verarbeitungsanordnung für den numerichen Primärwert $d_i$ mit insbesondere einer Recheneinheit (36-40-44), einem Anwendungsprogramm (L), Permanentspeichern (41-46-50) und Zwischenspeichern (34-38-42):
- wobei die Gesamtanordnung aus diesen Rechen- und numerishen Verarbeitungsanordnungen derart aufgebaut ist, daß sie zu gegebener Zeit bildet:
- eine Rechenanordnung (36), um, ausgehend von dem numerischen Primärwert $d_i$, einen ersten numerischen Sekundärwert $T_k$ zu bilden für die Gesamtdauer des Vorbeilaufs vor dem Fühler (22) einer jeden Serie von $n_c$ Markierungen (14-16), die zu einer Winkelperiode einer Verbrennung im Motor gehören;

wobei $n_c = (n.t/2k)$ et

$$T_k = \sum_{0}^{(n_c - 1)} d_i$$

2. System nach Anspruch 1, **dadurch gekennzeichnet,** daß in der Korrekturvorrichtung die zu einem gegebenen Motortyp gehörenden Werte der Gesamtmenge q gemessen werden oder als Funktion des erzeugten Drehmoments Cg und der von $T_k$ abgeleiteten Motordrehzahl dargestellt werden, und in einem der Rechenanordnung (56) zugeordneten Permanentspeicher (58) gespeichert sind.

3. System nach dem Oberbegriff des Anspruches 1, **dadurch gekennzeichnet,** daß das System außerdem eine Korrekturvorrichtung für den numerischen Wert Cg aufweist im Falle eines mit einem Überschuß an Verbrennungsgas arbeitenden Motors, das heißt für den Fall eines abgemagerten Gasgemisches mit r<1 in den Zylindern, um einen korrigierten Wert $(Cg)_p$ zu erhalten, wobei die Korrekturvorrichtung aufweist:
   - eine Rechenanordnung (60) zur Erstellung eines Zwischenwertes Ca=Cg/u, wobei u<1 ist und eine experimentell bestimmte gespeicherte Konstante (62) ist;
   - eine Rechenanordnung (64) zur Erstellung des gesuchten Wertes $(Cg)_p = Ca-k_R.R$, wobei $k_R$ eine experimentell bestimmte gespeicherte Konstante (66) ist, und der Füllgrad der Zylinder R als Funktion der bereits berechneten oder gemessenen Größe experimentell bestimmt ist und eine gespeicherte kartographische Darstellung (66) bildet.

4. System nach dem Oberbegriff des Anspruches 1, **dadurch gekennzeichnet,** daß das System außerdem eine Korrekturvorrichtung des nurnerischen Wertes Cg im Falle eines Dieselmotors aufweist zum Erhalt eines korrigierten Wertes $(Cg)_D$, wobei die Korrekturvorrichtung aufweist:
   - eine Rechenanordnung (60) zur Erstellung eines Zwischenwertes Ca = Cg/u, wobei u<1 ist, und eine experimentell bestimmte gespeicherte Konstante (62) ist;
   - eine Rechenanordnung (70) zur Erstellung des gesuchten Wertes $(Cg)_D$-Ca-$K_R$, wobei $K_R$ als experimentell bestimmter Wert wie eine Konstante oder besser als eine kartographische Darstellung als Funktion der bereits berechneten oder gemessenen Größe (68) gespeichert ist.

5. Verfahren zur Korrektur des das mittlere Drehmoment pro Verbrennung darstellenden numerischen Wertes Cg, der erhalten wird mittels des Systems nach dem Oberbegriff des Anspruchs 1, als Funktion der Gesamtmenge q der Abgasrückführung und der verbrannten Restgase in den Zylindern des Motors, **dadurch gekennzeichnet**, daß es die folgenden Verfahrensschritte aufweist:

   (e1) Erstellung eines Korrekturfaktors $Q_2 = (1-p_2.q)$, wobei $p_2$ eine experimentell bestimmte Konstante in der Nähe von 0,50 ist, und q der Wert der Gesamtmenge, und

   (e2) Anwenden dieses Faktors $Q_2$ auf den Meßwert Cg gegebenenfalls vorab korrigiert als Funktion der Anreicherung r des Gasgemisches, wenn r<1 ist, zum Erhalt eines korrigierten, numerischen Wertes $(Cg)_q$ oder $(Cg)_{r,q}$.

6. Verfahren nach Anspruch 5, **dadurch gekennzeichnet**, daß die Werte der Gesamtmenge q für einen bestimmten Motortyp aus einem Meßschritt oder einem kartographischen Schritt insbesondere als Funktion des erzeugten Drehmomentes Cg und der Motordrehzahl abgeleitet von $T_k$ resultieren.

7. Verfahren zur Korrektur des das mittlere Drehmoment pro Verbrennung darstellenden numerischen Wertes Cg, der mittels des im Oberbegriff des Anspruches 1 beschriebenen Systems erhalten wird, **dadurch gekennzeichnet,** daß zur Erstellung eines Meßwertes für das mittlere Drehmoment pro Verbrennung $(Cg)_p$ für einen mit einem Überchuß an Verbrennungsgas arbeitendem Motor, das heißt mit einem abgemagerten Gasgemisch (r<1) in den Zylindern, es außerdem die folgenden Verfahrensschritte aufweist:

(g) Berechnung (60) zur Erstellung eines Zwischenwertes Ca=Cg/u, wobei u<1 ist, und eine experimentell bestimmte gespeicherte Konstante (62) ist;

(h) Berechnung (64) zur Erstellung des gesuchten Wertes $(Cg)_p = Ca-k_R.R$, wobei $k_R$ eine experimentell bestimmte gespeicherte Konstante (66) ist, und der Füllgrad der Zylinder R experimentell als Funktion der bereits berechneten oder gemessenen Größe bestimmt wird und eine gespeicherte kartographische Darstellung (6) bildet.

8. Verfahren zur Korrektur des das mittlere Drehmoment pro Verbrennung darstellenden numerischen Wertes Cg, der mittels des im Oberbegriff des Anspruches 1 beschriebenen Systems erhalten wird, **dadurch gekennzeichnet,** daß zur Erstellung eines Meßwertes für das mittlere Drehmoment pro Verbrennung $(Cg)_D$ eines Dieselmotors es außerdem die folgenden Verfahrensschritte aufweist:

(i) Berechnung (60) zur Erstellung eines Zwischenwertes Ca = Cg/u, wobei u<1 ist, und eine experimentell bestimmte gespeicherte Konstante (62) ist;

(j) Berechnung (70) zur Erstellung des gesuchten Wertes $(Cg)_D = Ca-K_R$, wobei $K_R$ ein experimentell bestimmter Wert ist, der als Konstante oder besser als kartographische Darstellung als Funktion der bereits berechneten oder gemessenen Größe gespeichert ist (68).

$(52)\ (Cg)_r$

$(44)\ Cg$

$56$

$(Cg)_{\dot{r}}\ Q_2$

$(Cg)_q\ ou$

$(Cg)_{r,q.}$

$58$

$(38)\quad T4$

$q$

$(44)\quad Cg$

FIG. 2

$60$

$Cg$

$(44)$

$Ca = Cg/u$

$64$

$Ca - k_R \cdot R$

$(Cg)_P$

$u$

$62$

$k_R\ ;\ R$

$T4\quad (36)$

$66$

FIG. 3

$60$

$Cg$

$(44)$

$Ca = Cg/u$

$70$

$Ca - K_R$

$(Cg)_D$

$u$

$62$

$K$

$T4\quad (36)$

$68$

FIG. 4